Europäisches Patentamt

European Patent Office

Office européen des brevets

(19)

(11) Veröffentlichungsnummer: **0 140 275**
**B1**

(12) # EUROPÄISCHE PATENTSCHRIFT

(45) Veröffentlichungstag der Patentschrift:
09.12.87

(51) Int. Cl.⁴: **F 16 K 31/60**

(21) Anmeldenummer: **84112494.4**

(22) Anmeldetag: **17.10.84**

(54) **Handhebel für Eingriffmischventile.**

(30) Priorität: **19.10.83 DE 3337968**

(43) Veröffentlichungstag der Anmeldung:
**08.05.85 Patentblatt 85/19**

(45) Bekanntmachung des Hinweises auf die Patenterteilung:
**09.12.87 Patentblatt 87/50**

(84) Benannte Vertragsstaaten:
**AT BE CH DE FR GB IT LI NL SE**

(56) Entgegenhaltungen:
**DE - A - 3 018 180**
**DE - A - 3 103 891**
**DE - B - 1 963 451**
**DE - B - 2 856 300**
**DE - C - 3 018 771**
**DE - U - 7 232 994**
**US - A - 3 168 112**
**US - A - 4 375 225**

(73) Patentinhaber: **FRIEDRICH GROHE
ARMATURENFABRIK GmbH & CO, Hauptstrasse 137,
D-5870 Hemer 1 (DE)**

(72) Erfinder: **Gottwald, Adolf, An der Egge 19,
D-5860 Iserlohn (DE)**
Erfinder: **Köster, Wilfried, In den Feldern 10,
D-5750 Menden 2 (DE)**

## Beschreibung

Die Erfindung betrifft eine Handhebelbetätigungsvorrichtung für Eingriffmischventile mit den im Oberbegriff des Anspruchs 1 angegebenen Merkmalen.

Ein Eingriffmischventil dieser Gattung ist aus der Druckschrift DE-C-3018771 bekannt, wobei die beiden Drehachsen sich im Ventilgehäuse schneiden und der Handhebel radial durch einen Schlitz im Mantel des Ventilgehäuses herausgeführt ist. Bedingt durch das erforderliche Auf- und Abschwenken des Handhebels erstreckt sich der das Innere des Ventils freigebende Schlitz über einen erheblichen Teil der Länge des Mantels.

Ausserdem ist es bekannt, bei Mischventilen mit in einem Sondergehäuse gekapselt angeordneten Ventilscheiben und einem an der Stirnseite eingeführten Handhebel den Handhebel mit einer fest verbundenen Haube zu versehen, die einen entsprechend gestalteten Kopfbereich des Ventilgehäuses umfasst. Die Schwenk- und Taumelbewegungen des Handhebels werden hierbei allerdings zwangsläufig von der Haube mitvollzogen, was vielfach als unschön empfunden wird.

Der Erfindung liegt die Aufgabe zugrunde, einen verbesserten Handhebel für die im Oberbegriff des Anspruchs 1 angegebenen Mischventile zu schaffen.

Die Aufgabe wird erfindungsgemäss durch die im kennzeichnenden Teil des Anspruchs 1 angegebenen Merkmale gelöst. Mit diesen erfindungsgemässen Massnahmen wird mit einfachen Mitteln erreicht, dass das Hebelkopfgehäuse in jeder Handhebelstellung eine geschlossene Aussenform aufweist, wobei eine ästhetisch ansprechende und pflegefreundliche Gestaltung der Armatur ermöglicht ist.

Weitere Ausgestaltungen der Erfindung sind in den Ansprüchen 2 bis 7 angegeben.

Der Handhebel kann zweckmässig im Anschluss an eine den Ringbogen einschliessende Verkröpfung mit einem etwa radial vom Hebelkopfgehäuse abstehenden Griffstück versehen werden. Den jeweiligen Gegebenheiten entsprechend kann aber auch der Handhebel im Anschluss an den äusseren Bereich des Ringbogens mit einem Bügel um das Hebelkopfgehäuse herumgeführt werden, so dass das etwa radial vorstehende Griffstück an der gegenüberliegenden Seite des Hebelkopfes angeordnet ist. Bei dieser Ausführung wäre dann der Ringbogen an der vom Benutzer abgekehrten Seite aus der Mantelhülse herausgeführt.

Das den Handhebel aufnehmende Hebelkopfgehäuse kann vorteilhaft von einer drehbar, aber axial festliegend, auf dem Ventilgehäuse gehaltenen zylindrischen Mantelhülse gebildet werden, in der ein fensterartiger Längsschlitz zur Aufnahme des Ringbogens des Handhebels vorgesehen ist. Der obere Stirnbereich der Mantelhülse kann in einfacher Weise von einer Abdeckkappe mittels Schraub-, Schnapp- oder Bajonettverbindung verschlossen werden. Dabei ist es auch möglich, die Abdeckkappe mit Dekor- oder Strukturplatten zu versehen.

Ferner kann der Handhebel durch die einfache Einfügung eines Steckrings in das Hebelkopfgehäuse mit einem Anschlag versehen werden, mit dem wahlweise eine Begrenzung des Schwenkbereichs um die erste Drehachse bestimmbar ist, und durch die Ausbildung eines Hebelarmes mit Stellschraube am Handhebel im inneren Bereich des Hebelkopfgehäuses ein Anschlag zur wahlweisen Begrenzung des Schwenkbereichs um die zweite Drehachse geschaffen werden.

Schliesslich kann der Handhebel auch als Bügel aus dem Hebelkopfgehäuse herausgeführt werden, wobei dann zwei parallel angeordnete Ringbögen aus z.B. Rundstabmaterial tangential durch entsprechend geformte Öffnungen in der Mantelhülse des Hebelkopfes hindurchgleiten und im äusseren Bereich, beispielsweise in einem bogenförmigen Griffstück, zusammengeführt sind.

Ausführungsbeispiele der Erfindung sind in der Zeichnung dargestellt und werden im folgenden näher beschrieben. Es zeigt

Figur 1 ein in einer Sanitärarmatur eingesetztes Mischventil, teilweise geschnitten;

Figur 2 das Mischventil gemäss Figur 1 in Seitenansicht;

Figur 3 das Mischventil gemäss Figur 1 mit maximal verschwenktem Handhebel;

Figur 4 das Mischventil gemäss Figur 3 in Draufsicht mit entfernter Abdeckkappe;

Figur 5 ein anderes Ausführungsbeispiel eines Mischventils in Seitenansicht;

Figur 6 das Mischventil gemäss Figur 5 in Draufsicht.

Der Einfachheit halber sind bei den Ausführungsbeispielen in der Zeichnung gleiche oder entsprechende Elemente mit jeweils gleichen Bezugszeichen versehen.

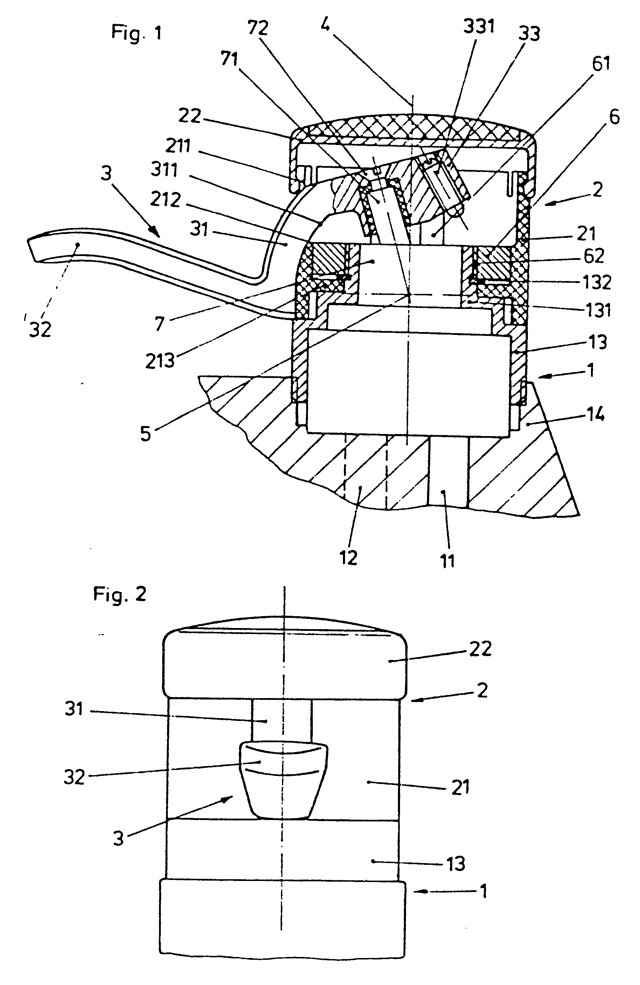

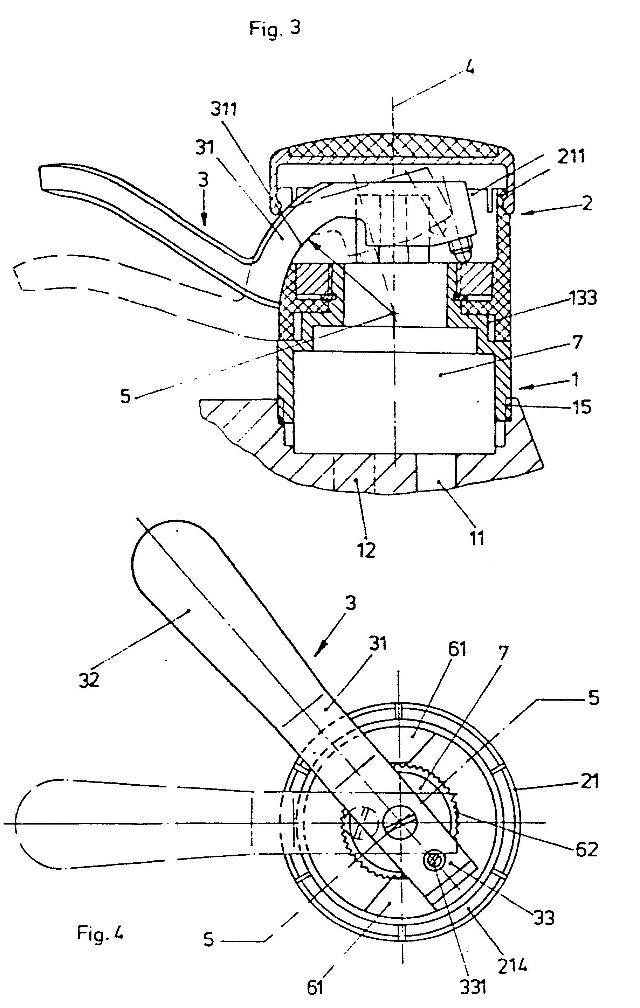

Das in den Figuren 1 bis 4 dargestellte Mischventil ist in einer Ventilkartusche 7 gekapselt angeordnet und wird von zwei aufeinanderliegenden Ventilscheiben, die z.B. aus Oxidkeramikmaterial hergestellt sind, gebildet. Die eine Scheibe ist festliegend in der Ventilkartusche angeordnet, während die andere mit einem in der Kartusche gelagerten und an der Stirnseite herausgeführten Kartuschenhebel 71 bewegbar angeordnet ist. Bei einer Drehbewegung um die erste Drehachse 4 wird die bewegliche oder Steuerscheibe zur Festscheibe verdreht und bewirkt somit eine Änderung des Mischungsverhältnisses, während ein Verschwenken des Kartuschenhebels 71 um die zweite Drehachse 5 die Steuerscheibe radial zur Festscheibe verschiebt und eine Änderung der Durchflussmenge bewirkt. Derartige Ventilkartuschen sind bekannt und handelsüblich, so dass in der Zeichnung diese Einzelheiten nicht dargestellt worden sind.

Die Ventilkartusche 7 ist in einem Ventilgehäuse 1 mit Zulaufkanälen 11 für das kalte und warme Wasser und einem Ablaufkanal 12 für das Mischwasser angeordnet. Das Ventilgehäuse 1 wird dabei im wesentlichen von einer Schraubbuchse 13 und einem Gehäusesockel 14 gebildet, wobei die Ventilkartusche von der Schraubbuchse 13 aufgenommen und mittels Schraubgewinde 15 dicht und drehfest in den Gehäusesockel 14 mit den Zu- und Ablaufkanälen 11, 12 gepresst wird.

Auf der Schraubbuchse 13 ist ein Hebelkopfgehäuse 2 mit einem radial herausgeführten Handhebel 3 angeordnet.

Das Hebelkopfgehäuse 2 wird im wesentlichen von einer Mantelhülse 21 und einer Abdeckkappe 22 gebildet. Die Mantelhülse 21 ist mit einem Ringbund 213 auf einem Ansatz 131 der Schraubbuchse 13 drehbar, aber axial mittels Sprengring 132 festliegend gelagert. An der äusseren Stirnseite der Mantelhülse 21 sind Schnappzungen 214 ausgebildet, mit denen die Abdeckkappe 22 auf der Mantelhülse 21 lösbar befestigt ist.

Auf dem aus der Ventilkartusche 7 stirnseitig vorstehenden Kartuschenhebel 71 ist der Handhebel 3 formschlüssig aufgesteckt und mittels Befestigungsschraube 72 gesichert. Der Handhebel 3 ist mit einem Ringbogen 31 zur zweiten Drehachse 5 durch die Wandung der Mantelhülse 21 hindurchgeführt. Der Radius der inneren Ringbogenfläche 311 ist dabei so bemessen, dass er etwa dem Aussendurchmesser der Mantelhülse 21 entspricht. Im Bereich des Ringbogens 31 weist die Mantelhülse 21 einen an der oberen Stirnfläche beginnenden Längsschlitz 211 auf, dessen Grund 212 etwa von dem Radius der inneren Ringbogenfläche 311 bestimmt ist. Der Längsschlitz 211 wird an der oberen Stirnfläche von dem Mantel der Abdeckkappe 22 begrenzt, wobei die Schnappzungen 214 so ausgebildet sind, dass der in der Mantelhülse 21 gebildete Schlitz vollständig von dem Ringbogen 31 ausgefüllt wird. An dem äusseren Ende des Ringbogens 31 ist mittels Verkröpfung ein sich radial von der Hülse erstreckendes Griffstück 32 angeformt.

Wird nun der Handhebel 3 um die zweite Drehachse 5 verschwenkt, so kann der Ringbogen 31 durch den Schlitz in der Mantelhülse 21 hindurchgleiten, wobei aber der Schlitz der Mantelhülse 21 durch den Ringbogen 31 ausgefüllt bleibt. Wird der Handhebel 3 um die erste Drehachse 4 verschwenkt, so wird synchron mit der Schwenkbewegung des Handhebels 3 auch das Hebelkopfgehäuse 2 auf dem Ventilgehäuse 1 verdreht. Das Innere des Hebelkopfgehäuses 2 ist somit bei jeder Schwenkbewegung des Handhebels 3 gegen Spritzwasser usw. geschützt.

Zur wahlweisen Begrenzung der Schwenkbewegung des Handhebels 3 um die erste Drehachse 4 ist auf dem Ansatz 131 des Ventilgehäuses 1 mittels Verzahnung 62 ein Steckring 6 aufsetzbar. Mit Hilfe von Anschlagnocken 61 kann die Schwenkbewegung des Handhebels 3 um die erste Drehachse 4 begrenzt werden, so dass z.B. der Warmwasserbereich des Mischventils wahlweise als Verbrühungsschutz reduziert werden kann.

Ausserdem ist der Handhebel 3 im Inneren des Hebelkopfgehäuses 2 mit einem Hebelarm 33 und einer Stellschraube 331 versehen. Mit Hilfe der Stellschraube 331 kann der Schwenkbereich um die zweite Drehachse 5 und damit die maximale Durchlaufmenge durch das Ventil reduziert werden. Als Anschlag für die Stellschraube 331 kann der auf dem Ventilgehäuse gehalterte Steckring 6 oder das Ventilgehäuse 1 dienen.

Der Zusammenbau der Handhebelbetätigungsvorrichtung kann z.B. in folgender Weise vorgenommen werden:

Zunächst wird die Ventilkartusche 7 in die Aufnahme des Gehäusesockels 14 eingefügt und durch Eindrehen in das Schraubgewinde 15 mit Hilfe eines an Schlüsselflächen 133 angreifenden Schlüssels dicht und drehfest in dem Ventilgehäuse 1 befestigt. Nunmehr wird die Mantelhülse 21 über den Ansatz 131 gestreift und mit dem Sprengring 132 in dieser Lage axial gesichert. Danach erfolgt das Aufschieben des Steckrings 6 auf die Verzahnung 62 des Ansatzes 131. Nunmehr kann der Handhebel 3 von oben in den stirnseitig offenen Längsschlitz 211 eingefügt und auf den aus der Ventilkartusche 7 stirnseitig vorstehenden Kartuschenhebel 71 aufgesteckt und mit der Befestigungsschraube 72 gesichert wurde. Als Abschluss wird dann die Abdeckkappe 22 über die Schnappzungen 214 gedrückt, und damit ist das Mischventil betriebsbereit.

Soll nun die maximale Durchflussmenge durch das Mischventil begrenzt werden, so wird durch einfaches Abnehmen der Abdeckkappe 22 die Stellschraube 331 zugängig, und eine entsprechende Justierung der maximalen Durchflussmenge kann vorgenommen werden.

Bei einer Begrenzung oder Veränderung des einstellbaren Mischbereiches, z.B. um einen Verbrühungsschutz zu schaffen, ist neben der Abdeckkappe 22 noch der Handhebel 3 von dem Kartuschenhebel 71 abzunehmen. Nunmehr kann der Steckring 6 von dem Ansatz 131 abgezogen werden und in einer entsprechend verdrehten Stellung auf die Verzahnung wieder aufgesteckt und der Handhebel 3 mit der Abdeckkappe 22 entsprechend am Mischventil befestigt werden. Zur Erleichterung der Begrenzung des Mischbereiches können auf der Stirnseite des Ansatzes 131 und des Steckrings 6 Markierungen angeordnet werden.

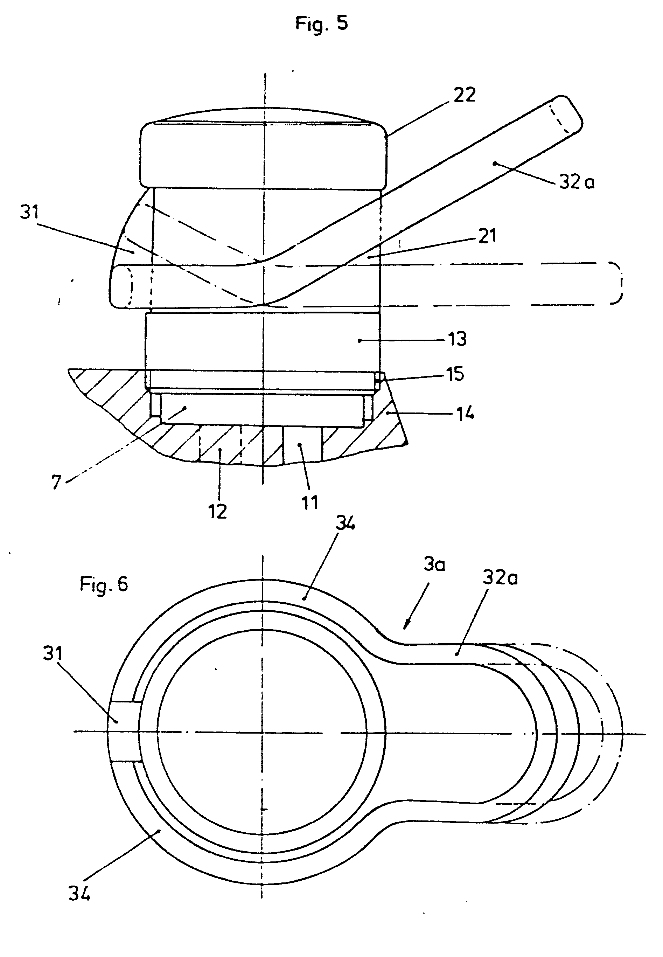

In den Figuren 5 und 6 ist ein anderes Ausführungsbeispiel eines Mischventils mit Handhebel gezeigt. Das Mischventil mit seinem Hebelkopfgehäuse entspricht dabei dem Ausführungsbeispiel in den Figuren 1 bis 4. Das Mischventil ist dabei mit einem Handhebel 3a versehen, wobei der Ringbogen 31 an der vom Benutzer abgekehrten Seite durch die Mantelhülse 21 hindurchgeführt ist. Am äusseren Ende des Ringbogens 31 ist der Handhebel 3a mit einem Bügel 34 um das Hebelkopfgehäuse 2 herumgeführt und trägt an der gegenüberliegenden Seite, d.h. an der dem Benutzer zugekehrten Seite, einen Handgriff 32a.

**Patentansprüche**

1. Handhebelbetätigungsvorrichtung für Eingriffmischventile mit einem in zwei Freiheitsgraden bewegbaren Ventilglied zur separaten Bestimmung des Mischungsverhältnisses und der Gesamtdurchflussmenge, wobei der mit dem Ventilglied verbundene, um zwei senkrecht zueinander im Ventilgehäuse angeordnete Drehachsen (4, 5) verschwenkbare Handhebel (3, 3a) seitlich aus dem Mantel (21) eines um die erste Drehachse (4) drehbar auf dem Ventilgehäuse gehaltenen Hebelkopfgehäuses (2) herausgeführt ist, dadurch gekennzeichnet, dass der Handhebel (3, 3a) im Bereich des Durchtritts durch den Mantel (21) des Hebelkopfgehäuses (2) die Form eines Ringbogens (31) mit einem Radius zur zweiten Drehachse (5) aufweist.

2. Handhebelbetätigungsvorrichtung nach Anspruch 1, dadurch gekennzeichnet, dass der Ringbogen (31) im Bereich einer Verkröpfung des Handhebels (3) ausgebildet ist und der Handhebel (3) ein etwa radial vom Hebelkopfgehäuse (2) vorstehendes Griffstück (32) hat.

3. Handhebelbetätigungsvorrichtung nach Anspruch 1, dadurch gekennzeichnet, dass im Anschluss am äusseren Ende des Ringbogens (31) der Handhebel (3a) um das Hebelkopfgehäuse (2) als Bügel (34) herumgeführt ist und ein Griffstück (32a) an der gegenüberliegenden Seite des Hebelkopfes trägt.

4. Handhebelbetätigungsvorrichtung nach den Ansprüchen 1 bis 3, dadurch gekennzeichnet, dass der Radius der inneren Ringbogenfläche (311) des Handhebels (3) etwa dem halben Aussendurchmesser des Hebelkopfgehäuses (2) entspricht und das Hebelkopfgehäuse (2) von einer etwa zylindrischen, auf dem Ventilgehäuse (1) drehbar fixierten Mantelhülse (21) mit einem Längsschlitz (211), dessen Grund (212) etwa von dem Radius der inneren Ringbogenfläche (311) bestimmt ist, sowie einer am äusseren Stirnbereich der Mantelhülse (21) befestigbaren und den Längsschlitz (211) im oberen Bereich begrenzenden Abdeckkappe (22) gebildet ist.

5. Handhebelbetätigungsvorrichtung nach Anspruch 4, dadurch gekennzeichnet, dass die Mantelhülse (21) mit einem inneren Ringbund (213) auf einem am Ventilgehäuse (1) ausgebildeten Ansatz (131) geführt und von einem Sprengring (132) gesichert ist, wobei auf den vorderen Bereich des Ansatzes (131) ein Steckring (6) mit Anschlagnocken (61) zur Begrenzung der Schwenkbewegung des Handhebels (3) um die erste Drehachse (4) mittels Verzahnung (62) in verschiedenen Drehstellungen aufsteckbar ist.

6. Handhebelbetätigungsvorrichtung nach den Ansprüchen 1 bis 5, dadurch gekennzeichnet, dass der Handhebel (3) im Hebelkopfgehäuse (2) einen Hebelarm (33) mit einer Stellschraube (331) hat, die den Schwenkbereich um die zweite Drehachse (5) entsprechend ihrer Schraubstellung zum Ventilgehäuse (1) begrenzt.

7. Handhebelbetätigungsvorrichtung nach Anspruch 1, dadurch gekennzeichnet, dass der Handhebel von einem, z.B. aus Rundstabmaterial geformten Bügel gebildet ist, bei dem die beiden Arme mit Ringbögen tangential durch entsprechend geformte Öffnungen in der Wandung des Hebelkopfgehäuses hindurchgeführt und im äusseren Bereich zu einem Griffstück zusammengeführt sind.

## Claims

1. Hand-lever operating device for single-lever mixer valves having a valve member which is movable in two degrees of freedom for determining separately the mixing ratio and the total flow, the hand lever (3, 3a), which is connected to the valve member and is pivotable about two axes of rotation (4, 5) arranged perpendicularly to each other in the valve housing, extending from the side of the casing (21) of a lever-head housing (2), which is so mounted on the valve housing as to rotate about the first axis of rotation (4), characterised in that the hand lever (3, 3a), in the region where it passes through the casing (21) of the lever-head housing (2), has the shape of an arc (31) of an annulus having a radius to the second axis of rotation (5).

2. Hand-lever operating device according to claim 1, characterised in that the annular arc (31) is formed in the region of a bend in the hand lever (3), and the hand lever (3) has a handle (32) which projects approximately radially from the lever-head housing (2).

3. Hand-lever operating device according to claim 1, characterised in that, from the outer end of the annular arc (31), the hand lever (3a) is guided round the lever-head housing (2) as a hoop (34) and has a handle (32a) on the opposite side of the lever head.

4. Hand-lever operating device according to claims 1 to 3, characterised in that the radius of the inner surface (311) of the annular arc of the hand lever (3) corresponds to approximately half the outside diameter of the lever-head housing (2), and the lever-head housing (2) is formed by an approximately cylindrical casing sleeve (21), which is rotatably fixed on the valve housing (1) and has a longitudinal slot (211) the bottom (212) of which is determined approximately by the radius of the inner surface (311) of the annular arc, and a cover plate (22) which can be fastened to the outer front region of the casing sleeve (21) and bounds the upper region of the longitudinal slot (211).

5. Hand-lever operating device according to claim 4, characterised in that the casing sleeve (21) is guided by an inner annular collar (213) on a projection (131) formed on the valve housing (1) and is secured by a retaining ring (132), it being possible to attach to the forward region of the projection (131), in different positions of rotation, by means of toothing (62), an insert ring (6) having stop cams (61) to limit the pivoting movement of the hand lever (3) about the first axis of rotation (4).

6. Hand-lever operating device according to claims 1 to 5, characterised in that the hand lever (3) has in the lever-head housing (2) a lever arm (33) having an adjusting screw (331) which limits the pivoting range about the second axis of rotation (5) in accordance with its screw position relative to the valve housing (1).

7. Hand-lever operating device according to claim 1, characterised in that the hand lever is formed by a bow made of, for example, round rod material, in which portions of the two limbs having the shape of annular arcs are guided tangentially through suitably shaped openings in the wall of the lever-head housing and in the outer region the arms are combined to form a handle.

## Revendications

1. Dispositif de manœuvre manuelle par un levier pour actionner des mitigeurs avec un organe de soupape susceptible d'être déplacé selon deux degrés de liberté pour déterminer séparément le rapport de mélange et le débit total, le levier de manœuvre manuelle (3, 3a), relié à l'organe de soupape, et susceptible de pivoter autour de deux axes de rotation (4, 5) disposés perpendiculairement l'un à l'autre dans le boîtier de la soupape, est prolongé latéralement hors de l'enveloppe (21) d'un boîtier (2) de tête de levier, dispositif caractérisé en ce que le levier (3, 3a) de manœuvre manuelle, dans la partie où il traverse l'enveloppe (21) du boîtier (2) de tête de levier, a la forme d'un arc de cercle (31), centré sur le second axe de rotation (5).

2. Dispositif de manœuvre manuelle selon la revendication 1, caractérisé en ce que l'arc de cercle (31) est formé dans la zone de coudage du levier (3) de manœuvre manuelle et que ce levier (3) comporte une poignée (32) faisant saillie à peu près radialement du boîtier (2) de tête de levier.

3. Dispositif de manœuvre manuelle selon la revendication 1, caractérisé en ce qu'à son raccordement à l'extrémité externe de l'arc de cercle (31), le levier (3a) de manœuvre manuelle passe autour du boîtier (2) de la tête de levier en formant un étrier (34) et porte une poignée (32a) sur le côté opposé de la tête de levier.

4. Dispositif de manœuvre manuelle selon les revendications 1 à 3, caractérisé en ce que le rayon de la surface interne (311) de l'arc de cercle du levier (3) de manœuvre manuelle correspond à peu près au demi-diamètre du boîtier (2) de la tête de levier, et que ce boîtier (2) de la tête de levier est constitué par une douille-enveloppe à peu près cylindrique (21), fixée sur le boîtier (1) de la soupape de façon à pouvoir tourner et comportant une fente longitudinale (211) dont le fond (212) est à peu près défini par le rayon de la surface interne (311) de l'arc de cercle, le boîtier de la tête de levier comportant, en outre, un capot de recouvrement (22), susceptible d'être fixé sur la partie frontale externe de la douille-enveloppe (21) et limitant dans sa partie supérieure la fente longitudinale (211).

5. Dispositif de manœuvre manuelle selon la revendication 4, dispositif caractérisé en ce que la douille-enveloppe (21) est guidée par un bandeau annulaire interne (213) sur un appendice (131) prévu sur le boîtier (1) de la soupape, et est arrêtée par un jonc (132), une bague (6), avec des cames de butée (61) pour limiter le pivotement du levier (3) de manœuvre manuelle autour du premier axe de rotation (4), étant susceptible d'être embrochée dans différentes positions de rotation au moyen d'une denture (62).

6. Dispositif de manœuvre manuelle selon les revendications 1 à 5, caractérisé en ce que le levier (3) de manœuvre manuelle comporte, dans le boîtier (2) de la tête de levier, un bras de levier (33) avec une vis de réglage (331), qui limite la zone de pivotement autour du deuxième axe de rotation (5) en fonction de sa position de vissage par rapport au boîtier (1) de la soupape.

7. Dispositif de manœuvre manuelle selon la revendication 1, caractérisé en ce que le levier de manœuvre manuelle est constitué par un étrier, formé par exemple à partir d'un barreau rond, étrier dont les deux bras en arcs de cercle sont guidés tangentiellement, par des ouvertures de forme appropriée, à travers la paroi du boîtier de la tête du levier, et sont réunis dans leur partie externe pour constituer une poignée.

**Fig. 1**

**Fig. 2**

Fig. 3

Fig. 4

Fig. 5

Fig. 6